# EUROPEAN PATENT SPECIFICATION

(11) **EP 1 784 883 B1**
(45) Date of publication and mention of the grant of the patent: **12.12.2012**
(21) Application number: 05762886.9
(22) Date of filing: 28.07.2005
(51) Int. Cl.: C01B 3/34, H01M 8/04, H01M 8/06

(54) **FUEL CELL SYSTEM**
BRENNSTOFFZELLENSYSTEM
SYSTÈME DE PILE À COMBUSTIBLE

(30) Priority: 28.07.2004 AU 2004904229
(43) Date of publication of application: 16.05.2007
(73) Proprietor: Ceramic Fuel Cells Limited, Noble Park, VIC 3174 (AU)
(72) Inventor: KAH, Michael, Bonbeach, Victoria 3196 (AU)
(74) Representative: Jones, Helen M.M.
(86) International application number: PCT/AU2005/001107
(87) International publication number: WO 2006/010212

(56) References cited:
- DE-A1- 10 315 697
- DE-A1- 10 330 123
- US-A- 3 585 078
- US-A- 3 961 986
- US-A- 3 961 986
- US-A- 4 002 805
- US-A- 5 169 730
- US-A1- 2003 033 753
- US-A1- 2003 059 729
- US-A1- 2003 122 266
- PATENT ABSTRACTS OF JAPAN vol. 2000, no. 13 & JP 2000 277134 A (SANYO ELECTRIC CO LTD) 06 October 2000

## Description

The present invention relates to a fuel cell system and to a method of operating such a system. More specifically, the present invention relates to the manner in which a fuel delivery system of a fuel cell system is operated in order to achieve practical advantages in terms of system operation.

In the purest form of the reaction, fuel cells produce electricity from hydrogen and oxygen with water being produced as a by-product in the form of steam. Invariably, however, hydrocarbon fuels such as natural gas or higher (C₂₊) hydrocarbons are used as the source of hydrogen and air is used as the source of oxygen.

Prior to delivery to the fuel cell it is now conventional to process hydrocarbon fuel to a lesser or greater extent using a fuel reformer. Thus, in proton exchange membrane (PEM) type fuel cells, it is intended that the hydrocarbon fuel undergoes substantially complete reformation by reaction with water (steam) in order to produce a hydrogen-rich stream for delivery to the fuel cell. In contrast, in solid oxide fuel cell (SOFC) systems it is possible to use catalysts within the fuel cell itself (on the anode side of the fuel cell) to effect reforming of hydrocarbons (usually methane). So-called internal reforming in this way has advantages for operating efficiency in terms of balancing the exothermic electricity-generating reactions that occur within the fuel cell with the endothermic reforming reaction. However, in this case the fuel composition to the fuel cell and the extent of internal reforming within the cell should be controlled to avoid excessive cooling of the fuel cell. In practice, where a fuel cell is designed to carry out internal reforming, the fuel to be delivered to it is pre-processed in a fuel reformer in order to manipulate the hydrocarbon content of the fuel as required based on the operating characteristics of the cell. Here the reformer is typically referred to as a steam pre-reformer.

Hydrocarbon reforming takes place in the presence of steam and the steam to carbon ratio in the gas stream to the reformer is one of the most critical variables in the reforming reaction. Furthermore, the presence of steam in the fuel stream to the fuel cell can prevent carbon deposition on the catalyst used to effect internal reforming. Accurate control of the steam to carbon ratio is therefore an important consideration.

It is important for effective and efficient operation of a fuel reformer that the steam and fuel to be processed are delivered at a suitable rate/pressure. Invariably, the steam is delivered to the reformer under pressure from a steam generator, such as a water boiler, with appropriate flow control as required. Gaseous fuel may be delivered under pressure directly from a bottled/liquified source. In this case accurate control of the steam to carbon ratio in the gas stream to the reformer requires careful control of the flow of both the steam and fuel components. In turn this may require complex monitoring and control systems, as for example shown in patent publications US3 585 078and US 3961 986. It would be desirable to provide a fuel cell system that allows the steam to carbon ratio to be controlled in a more straightforward manner.

The use of a mains supply of gaseous fuel to the reformer represents a convenient and economic alternative to the supply of fuel from a bottled/liquified supply. However, mains supply gas is not typically provided at sufficient pressure to provide adequate flow of fuel to the reformer. To overcome this drawback it is known to use gas boosters to increase the pressure of the fuel before it enters the reformer. This is effective but leads to a reduction in overall fuel cell system performance due to parasitic losses. This can be a particular problem for small, low output systems where the power required to operate the gas booster(s) may represent a significant proportion of the fuel cell output. The need to use gas boosters also leads to increased equipment costs, especially as further flow control components may then be required to moderate fuel gas flow. The resultant system is also more complex in design and this may be to the detriment of operational reliability.

In the circumstances, it would be desirable to provide a fuel cell system that is capable of operating on a mains supply of gaseous fuel and that does not require the use of a gas booster in order to ensure that the fuel is delivered to a fuel reformer at an appropriate pressure for effective and efficient operation of the reformer. It would also be desirable to provide a fuel cell system that is economic to construct and operate and that has simple control systems to regulate and moderate flow of gaseous species to the reformer. Accordingly, in one embodiment, the present invention provides a fuel cell system comprising: a fuel cell assembly; a fuel reformer for delivery of a fuel cell supply stream to the fuel cell assembly; a jet pump for delivery to the fuel reformer of a gas stream comprising steam and a gaseous hydrocarbon fuel, the jet pump having a single design utilisation condition and comprising a steam inlet, an inlet for the gaseous hydrocarbon fuel and an outlet for the gas stream; a steam generator for delivery of pressurised steam to the steam inlet of the jet pump; and a source of the gaseous hydrocarbon fuel for delivery of the gaseous hydrocarbon fuel to the fuel inlet of the jet pump via a fuel delivery line, wherein the fuel exerts a pressure at the fuel inlet of the jet pump that is insufficient to cause adequate fuel flow to the reformer to ensure satisfactory operation of the reformer over the intended range of operation; and a flow control device in the fuel delivery line to the jet pump, wherein the flow control device is adjustable in order to control the proportion of fuel entrained by a given steam flow rate through the jet pump so that the steam to carbon ratio in the gas stream may be controlled.

In another embodiment, the present invention provides a method of operating a fuel cell system in accordance with the present invention, wherein a flow of steam is delivered to the jet pump thereby entraining and causing to flow gaseous hydrocarbon fuel through the jet pump, and adjusting the flow control device in order to control the proportion of fuel entrained by a given steam flow rate through the jet pump so that the steam to carbon ratio in the gas stream may be controlled, thereby generating a gas stream comprising steam and gaseous hydrocarbon fuel that is suitable for delivery to the fuel reformer.

In another embodiment, the present invention provides a fuel cell sub-system for delivery of a fuel cell supply stream to a fuel cell assembly, the fuel cell sub-system comprising: a fuel reformer for delivery of the fuel cell supply stream to the fuel cell assembly; a jet pump for delivery to the fuel reformer of a gas stream comprising steam and a gaseous hydrocarbon fuel, the jet pump having a single design utilisation condition and comprising a steam inlet, an inlet for the gaseous hydrocarbon fuel and an outlet for the gas stream; a steam generator for delivery of pressurised steam to the steam inlet of the jet pump; a fuel delivery line for delivering the gaseous hydrocarbon fuel to the inlet of the jet pump; and a flow control device in the fuel delivery line to the jet pump, wherein the flow control device is adjustable in order to control the proportion of fuel entrained by a given steam flow rate through the jet pump so that the steam to carbon ratio in the gas stream may be controlled.

It will be appreciated that the fuel cell sub-system is a component of the fuel cell system in accordance with the present invention. The sub-system is responsible for the generation of a fuel supply stream for use in a fuel cell assembly by steam reforming of a hydrocarbon fuel in a fuel reformer. In the following the invention is described with particular emphasis on the fuel cell system. However, it will be appreciated that such description will have applicability to the fuel cell sub-system also.

Furthermore, it will be appreciated that the sub-system may have utility in systems other than fuel cell systems in which hydrocarbon fuel is reformed using a steam reformer.

Central to the present invention is the use of a jet pump to provide a gas stream that comprises steam and gaseous hydrocarbon fuel and that is suitable for effective and efficient operation of a fuel reformer to which the gas stream is delivered. By this is meant that the fuel reformer has a suitable steam to carbon ratio and flow rate for operation of the fuel reformer over the intended operating range of the reformer. Here it is important to note that, in accordance with the present invention the pressure exerted by the fuel at the relevant inlet of the fuel pump is otherwise insufficient to cause adequate fuel flow to the fuel reformer to ensure satisfactory operation thereof over the intended range of operation. In this regard the jet pump functions as a fuel gas booster to ensure that the fuel is provided to the fuel reformer as required. Without the jet pump as used in accordance with the present invention a conventional gas booster would be required to ensure that the rate and pressure of fuel supply to the reformer is appropriate. In a preferred embodiment the fuel pressure at the inlet to the fuel inlet of the jet pump is zero or essentially zero so that there is no flow or negligible flow of fuel into the jet pump.

As will be explained the pressure characteristic of the fuel at the inlet of the jet pump as described may be attributable directly to the pressure at which the fuel is supplied from source. Alternatively, or additionally, specific steps may be taken in accordance with the invention to ensure that the pressure exerted by the fuel at the inlet to the jet pump is such that there is insufficient flow to otherwise support reformer operation. It will be appreciated from this that the flow of steam through the jet pump is in itself responsible for suitable delivery of fuel to the fuel reformer.

Use of pressurised steam to cause suitable flow of the fuel avoids the need to use a gas booster to ensure adequate flow of fuel to the fuel reformer. In turn, this avoids parasitic losses and reliability issues that may be associated with the use of gas boosters. Furthermore, and as will be explained below, this approach enables control systems needed for monitoring and regulation of flow to the reformer to be greatly simplified. This is primarily because the steam to carbon ratio of the output stream of the jet pump is influenced primarily, or preferably exclusively, by the supply of steam to the jet pump. In other words there is only one significant supply variable that influences the steam to carbon ratio. In this regard the fuel is a "passive" component.

It may be appreciated from the foregoing that the jet pump is provided upstream of and in communication with the fuel reformer and that the steam reformer delivers a processed (reformed) fuel stream to a fuel cell assembly provided downstream of it. This processed fuel stream is referred to above as the fuel cell supply stream. The fuel cell assembly produces electricity as a result of reactions at its electrodes involving this processed fuel stream and oxygen-containing gas.

The various components of the fuel cell system are in communication with each other by means of conventional gas supply conduits/pipes. Ancillary components such as control valves etc. may also be used, as required. The term "upstream" and downstream" are intended to reflect the positions of the various components of the system relative to each other.

The jet pump (otherwise known as an "ejector") relies on the Venturi effect to entrain the gaseous hydrocarbon fuel by flow of steam through the jet pump of steam. The exact design of the jet pump is not especially critical provided that the intended effect is achieved. In general terms however the jet pump comprises a body portion that defines an elongate conduit/passage through which, in use, the steam will flow. The cross-sectional area of this conduit is reduced away from the steam inlet end of the jet pump. This causes the velocity of the steam to be increased as it flows through the conduit with a corresponding reduction in pressure. The body of the jet pump defines a further conduit for entrainment of gaseous fuel and this extends into the elongate conduit in the region where the cross-sectional areas is reduced. This fuel conduit is in communication with the gaseous hydrocarbon fuel by a suitable delivery line. The increase in velocity of steam associated with flow of steam through the jet pump entrains of fuel along this delivery line with subsequent mixing of the steam and gaseous fuel. This mixture exits the jet pump under pressure via a suitable outlet. A delivery line then takes the fuel/gas mixture to an inlet of the fuel reformer.

Appropriate input of steam to the jet pump results in a predetermined and desired flow of fuel gas resulting in a gas stream that is delivered to the reformer with the required composition (in terms of steam to carbon ratio) and at a predetermined pressure. The design of the jet pump will also have an impact on these aspects. Without suitable input of steam any flow of fuel attributable to the fuel supply pressure alone will be inadequate to support reformer function over the intended range of operation.

The dimensions and design of the jet pump may be manipulated in order to meet the requirements of any given steam reformer and fuel cell system. This may involve computer modelling in order to understand the kind of flow rates and characteristics that may be achieved for a particular design of jet pump given the principles applicable in the present invention. The jet pump should be made of materials that are able to withstand the corrosive environment associated with the delivery of the gaseous species at elevated temperatures. It is believed that one skilled in the art would have no difficulty in arriving at a suitably designed jet pump, and useful models may in fact be commercially available.

Flow of steam to (and through) the jet pump is "active" and occurs as a result of the steam being supplied under pressure from a steam generator. The steam generator may be of any design that is capable of providing superheated steam at elevated pressure. Usually, the steam is delivered at a temperature of from 100 to 1000°C, for example, from 350 to 850°C at a pressure of from 5 kPag to 50 MPag, for example from 50 kPag to 500 kPag. Steam is supplied to the jet pump from the steam generator by a suitable delivery line. This line may include a valve to regulate steam flow, as required. Alternatively or additionally, the steam generator may be operated with the steam output being manipulated by the amount of water delivered to the steam generator. In this case the steam generator typically includes a control valve provided in the line for delivering water to the generator. This delivery line may also include a flow meter to measure the flow of water to the steam generator, and thus may give an indication as to the amount of steam that is being produced. Suitable steam generators are known in the art and are in use in conventional fuel cell systems.

The output of the steam generator, measured as the amount of water converted to steam, will vary depending upon a number of factors, including the power output of the fuel cell and variations in load on the cell. By way of example, the output of the steam generator for a 1kW rated fuel cell system may be about 500g/hour.

As explained, at the relevant inlet to the jet pump the gaseous hydrocarbon fuel is provided at a gas pressure that is insufficient to support flow of the fuel through the jet pump. Previously, in this situation, conventional techniques would have required use of a gas booster to achieve the desired flow rate of fuel for delivery to the reformer. However, use of a jet pump as described herein means that gas boosters are no longer required to achieve suitable flow of the gaseous fuel.

The fact that the fuel exerts a pressure that is insufficient to sustain flow may actually be a significant advantage in terms of operational control of the steam to carbon ratio in the fuel stream that is to be delivered to the reformer. This is because the rate of fuel flow is influenced only or to a significant extent by the flow rate of steam through the jet pump, and there is no or negligible effect on the steam to carbon ratio due to the pressure at which the full is supplied at the fuel inlet of the jet pump.

The way in which this fuel pressure characteristic is achieved will vary depending upon the source of the hydrocarbon fuel and, more specifically, on the pressure at which fuel is provided. Thus, if the hydrocarbon fuel is supplied under relatively high pressure, such as from a bottled/liquefied source, it may be appropriate in accordance with the present invention to include in the line that delivers fuel to the inlet of the jet pump a flow control device (pressure regulator) to suitably reduce the fuel pressure at the jet pump inlet. In a preferred embodiment the flow control device is a zero governor so that the fuel gas pressure at the inlet to the jet pump is essentially zero. This will afford enhanced control on the steam to carbon ratio in the output steam of the jet pump since the flow rate of steam through the jet pump will be solely responsible for fuel uptake.

Where the fuel is provided from a source at relatively low pressure, or pressure drop along the delivery line from the source to the fuel inlet of the jet pump is sufficiently high such that the fuel exerts insufficient pressure at the inlet of the jet pump, it is probably not necessary to include any form of flow control device in the delivery line from the fuel source to the fuel inlet of the jet pump. However, a flow control device is employed in order to allow more control of the steam to carbon ratio. This is because, assuming a single design utilisation condition, the efficiency of any given jet pump with respect to steam uptake (entrainment) of hydrocarbon fuel usually varies depending on the flow rate of steam through the jet pump. Thus, at low steam flow rate, the fuel uptake tends to be very low and this results in a relatively high S/C ratio in the output of the jet pump. In contrast, when the steam flow rate through the jet pump is high, the associated fuel uptake is much more significant resulting in a relatively low S/C ratio in the output of the jet pump. In practice, the variation in performance of the jet pump with respect to fuel uptake depending upon steam flow rate through the jet pump can make it difficult to achieve the desired S/C ratio over the range of steam flow rates likely to be encountered during operation of the fuel cell. This is especially problematic where a suitable S/C operating ratio lies in a relatively narrow range (typically the S/C ratio is from 1.5 to 3, preferably from 2 to 2.5). The fuel cell system includes one or more flow control devices that are intended to normalise the performance of the jet pump over a range of likely steam flow rates, thereby providing greater control on the S/C ratio in the output of the jet pump. Thus, the fuel cell system comprises a flow control device in the fuel delivery line to the jet pump, wherein the flow control device may be adjusted in order to control the proportion of fuel entrained by a given steam flow rate through the jet pump so that the steam to carbon ratio in the gas stream may be controlled. A variety of different flow control devices may be used provided they give the desired effect.

In this embodiment the flow control may take the form of a zero governor and needle valve provided in series and upstream of the fuel inlet of the jet pump (and downstream of the fuel source). Assuming a fixed fuel supply, for a relatively low steam flow rate through the jet pump, the zero governor can be adjusted to compensate for the otherwise low fuel uptake to give the desired S/C ratio in the output of the jet pump. In contrast, when the steam flow rate is relatively high, fuel uptake may be disproportionately high leading to an undesirable reduction in S/C ratio. In that case the needle valve is adjusted to reduce fuel uptake and provide the desired S/C ratio in the output of the jet pump. It will be appreciated that adjustment (setting) of the zero governor and needle valve enable the fuel uptake by the jet pump to be biased as required to achieve a suitable S/C ratio over the range of steam flow rate likely to be applied in practice. This is typically done when the system is being commissioned. Zero governors and needle valves useful in implementation of this embodiment are commercially available. If desired, the needle valve can be replaced with a fixed orifice that gives the same pressure drop as the needle valve. Other flow control devices may be used to achieve the same effect, such as modulating valves.

The source of the gaseous hydrocarbon fuel is preferably mains supply gas, such as a "domestic" gas supply. Preferably, the gas is natural gas. This tends to be economic and convenient to use. Mains supply gas also has the advantage that the supply pressure is essentially constant and this means that it is possible to design a fuel cell system that does not need to take into account possible significant fluctuations in supply pressure. Typically, the maximum pressure at which the gaseous fuel is provided at source is about 1.1kPa. This is well below the kind of gas pressures required for delivery of fuel to a steam reformer for efficient and effective operation thereof. Here the requisite pressure is typically 5kPa. It should also be noted that the kind of supply gas pressure associated with a bottled/liquified gas, such as propane, is likely to be several bars depending upon temperature. Depending upon the ability of the jet pump to entrain the gaseous fuel, it may be possible to operate the present invention at fuel gas pressures of 5kPa or less, for example about 1kPa. Usually, the fuel cell system is designed with the intention of processing a particular type of gaseous fuel.

The source of the fuel gas is connected to an appropriate inlet of the jet pump by a suitable delivery line. A valve is usually provided in this delivery line to shut-off the supply of the fuel gas as required for safety considerations. When steam flows through the jet pump and the valve is open, fuel gas will be drawn into the jet pump via this delivery line. As noted, it may not be necessary to include in this delivery line any pressure regulators and the like that might otherwise be required to prevent pressure surges if the fuel gas was delivered from a source that fluctuated in gas supply pressure. In a preferred embodiment it is not necessary to include a flow meter to monitor flow of steam from the steam generator to the steam inlet of the jet pump. In this case steam flow may be regulated simply by reference to the flow rate of fuel that occurs as a consequence of steam flow through the jet pump. In turn this fuel flow may be measured using a suitable metering system provided at the fuel inlet of the jet pump. Conventional metering systems may be used in this regard. Accurate control of the system in accordance with this aspect of the invention will also be facilitated by pre-characterisation of the jet pump and the effect on fuel uptake of variables such as steam flow rate and steam temperature, and jet pump design.

The kind of jet pumps described used in the present invention have a single utilisation design condition such that the volume of gaseous fuel drawn into the jet pump is related to the volume of steam. Lowering the velocity of steam into the jet pump will lower the steam to carbon ratio. However, in a jet pump having a single design utilisation condition, this may present process issues if the steam to carbon ratio varies too much over the turn down range of the fuel cell system. It would therefore be advantageous to control the steam to carbon ratio in the input stream to the reformer over the turn down range of the system. As described above, this may be achieved using a zero governor and needle valve. The needle valve can be replaced with a fixed orifice or, indeed, any other suitable flow control device.

In another embodiment the steam to carbon ratio may be suitably controlled by overdesigning the jet pump so that it is possible to achieve ratios of steam to carbon that are lower than would be required in practice. In this case a proportional control valve may be included in the fuel delivery line to the jet pump. Manipulation of this valve will restrict the proportion of fuel entrained by a given steam flow rate through the jet pump so that the steam to carbon ratio may be controlled within the kind of limits encountered in practice.

The same effect may be achieved by maintaining the rate of water input to the steam generator and varying the temperature at which the generator is operated in order to vary the velocity of steam to the jet pump. At a constant mass throughput of water in the steam generator a relatively high velocity of steam to the jet pump will entrain more fuel than a relatively low velocity of steam. The steam to carbon ratio would be varied accordingly.

In the reformer the fuel is processed by catalytic reformation of hydrocarbons in the presence of steam. A variety of different suitable reformers are known in the art and any of these may be employed in accordance with usual practice bearing in mind the operating parameters influencing successful practice of the present invention. The reformer used and the extent to which reformation takes place will depend upon the initial and desired compositions of the hydrocarbon fuel, the type of fuel cell being used and, possibly, the prevailing operating characteristics of the fuel cell. Typically, the fuel reformer is a conventional steam reformer. Commonly, steam reforming of hydrocarbons is carried out at a steam to carbon (S/C) ratio of greater than 2:1 and the jet pump should be operated in order to achieve this in the steam/fuel stream supplied to the reformer.

In a preferred embodiment of the present invention, the reformer is a steam pre-reformer and the fuel cell assembly is capable of internal reforming of hydrocarbons at the anode thereof. Generally, the pre-reforming process will be carried out such that the hydrocarbon fuel is resident over the catalyst used in the reformer for a sufficient time to ensure at least substantially complete conversion of the C₂₊ hydrocarbons, preferably to less than about 0.1% by volume (on a dry basis) in the mixture from the pre-reformer. This prevents deposition of carbon on the anode of the fuel cell when heavier hydrocarbons are reformed on the anode. However, some C₂₊ hydrocarbons may be present in the mixture and in the resultant fuel stream.

Preferably, steam pre-reforming is carried out such that the methane content of the fuel stream to the fuel cell assembly is adjusted based on prevailing load characteristics and thus the prevailing cooling requirements of the fuel cell system. The preferred relatively high levels of methane in the fuel stream to the fuel cell anode have the potential to cause excessive cooling of the fuel cell as a result of the endothermic methane internal steam reforming reaction, as noted above. This problem is more likely to be encountered in a wholly ceramic SOFC fuel cell stack due to the low thermal conductivity of ceramic materials, but can be alleviated by incorporating metal or metallic components in the fuel cell stack, for example as the gas separators between individual fuel cells, to improve the thermal conductivity across the stack. Alternatively, or in addition, other means may be provided to alleviate excessive cooling at the fuel entry edge of each fuel cell assembly, including preheating of the fuel stream.

When employed, steam pre-reforming is generally performed at a temperature no greater than about 550°C, preferably in the range of 350 to 450°C. Heat may be supplied during the pre-reforming process, but the pre-reforming process can be performed adiabatically so that the specified operating temperature is the respective outlet temperature.

As noted, preferably, methane in the fuel stream delivered to the fuel cell is internally reformed within the fuel cell in the presence of steam from the steam supplied and from the oxidation reaction at the anode to produce a waste stream of CO₂ and H₂O. Steam present in the waste stream may be recycled to the fuel stream input of the fuel cell. The temperature in the fuel cell should be at least 650°C, more preferably at least 700°C to ensure substantially complete reforming of the methane. In an SOFC the temperature is likely to be at least 700°C so that complete reforming of the methane is likely to be achieved.

To effect internal reforming the anode in the fuel cell comprises a suitable catalyst. Preferably this is a nickel material, such as a nickel/zirconia cermet, which is used to catalyse the internal reforming reaction in the fuel cell. The fuel cell and its associated assembly can take any suitable form provided it operates at a temperature of at least 650°C to provide at least substantial conversion of the methane in the internal reforming reaction. By way of example only, several different planar SOFC components and systems, SOFCs and materials are described in our International Patent Applications PCT/AU96/00140, PCT/AU96/00594, PCT/AU98/00437, PCT/AU98/00719 and PCT/AU98/00956, the contents of which are incorporated herein by reference, including the corresponding US national phase patent 5,942,349 and patent applications 09/155061, 09/445735, 09/486501 and 09/554709, respectively. Other disclosures appear in our International patent applications PCT/AU99/01140, PCT/AU00/00630 and PCT/AU00/00631.

Generally, the fuel cell to which the fuel stream is supplied will be one of multiple fuel cells to which the fuel stream is also supplied, commonly called a fuel cell stack in the case of planar SOFCs. However, the invention also extends to the process being performed using a single fuel cell.

The invention may of course be employed in relation to fuel cells that do not rely on internal reforming at the anode. Thus, the invention may be used in a PEM type system, as described earlier.

The invention may also be employed in any system where a fuel reformer is used to generate hydrogen in a steam reforming reaction. The invention relates to such systems and to methods of producing hydrogen using them. The crux of the present invention is the way in which the jet pump is used to boost the fuel supplied to the reformer rather than the type of overall system in which the reformer is included as a component part.

An embodiment of the present invention is illustrated in the accompanying non-limiting figure which is a schematic representation of a fuel cell system in accordance with the present invention.

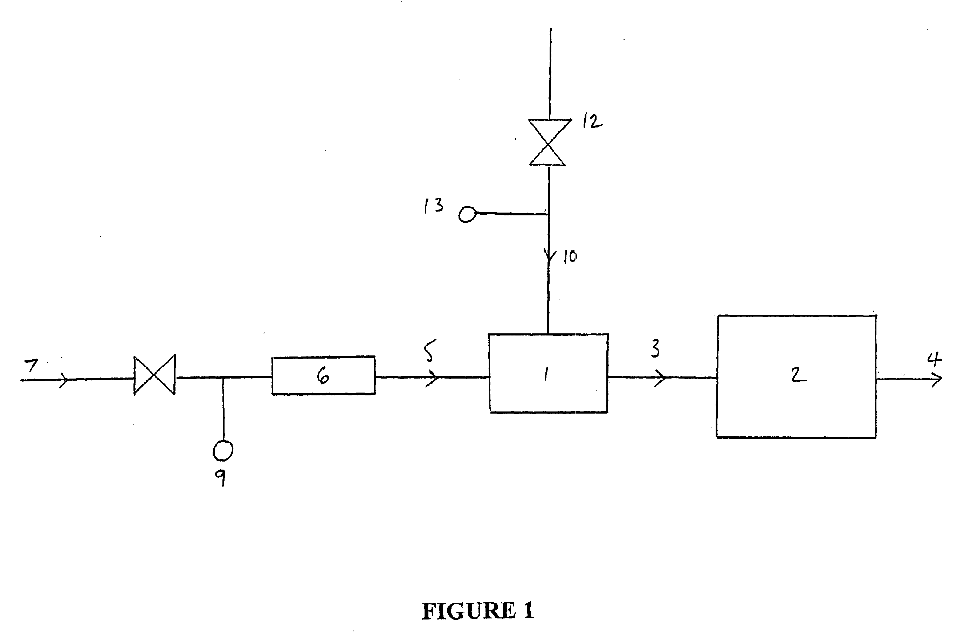

Thus, Figure 1 shows a jet pump (1) that supplies a steam reformer (2) with a steam/fuel stream via a delivery line (3). The reformer (2) processes the fuel/steam supply stream and delivers a fuel cell supply stream to the anode side of a fuel cell assembly (not shown) via a delivery line (4). The jet pump (1) includes an inlet line (5) for a primary feed (steam) that is produced by a steam generator (6). The steam generator (6) is supplied with fresh water through delivery line (7) in which there is a flow control valve (8). Additionally, the delivery line (7) includes a mass flow meter (9) to monitor flow of water to the steam generator. Gaseous hydrocarbon fuel may be drawn into the jet pump (1) via delivery line (10) from a mains supply of natural gas (11). A control valve (12) is provided in this delivery line (10) in order to shut-off access to the gas supply as required. A mass flow meter (13) is also provide in the delivery line (10).

During operation water is provided to the steam generator (6) and a stream of high pressure steam flows through the jet pump (1) via the relevant delivery line (5) Although not shown in detail, the jet pump is designed such that the steam passes through a conduit that is reduced in cross-sectional area away from the steam inlet end of the jet pump (1). The effect of this is to increase the velocity of the steam with a consequential reduction in pressure within this region of the jet pump (1). The region in the jet pump (1) where the cross-sectional area of the steam conduit is reduced is also in communication with the gaseous fuel supply (11) via delivery line (10). The reduction in pressure associated with flow of the steam through the jet pump (1) draws gaseous fuel along the delivery line (10) and into the jet pump (1) where it is entrained and mixed with the flow of steam. The result is an increase in effective pressure at which the gaseous fuel is supplied. The output of the jet pump is a high pressure stream comprising gaseous fuel that is then delivered to the steam reformer (2) for processing before delivery to the fuel cell.

In the embodiment shown the pressures exerted by the fuel at the inlet of the jet pump is insufficient to support reformer operation. However, if this was not the case it may be appropriate to include in the delivery line (10) a pressure regulator (preferably a zero governor) in order to ensure that the fuel pressure at the fuel inlet of the jet pump (1) is insufficient to cause flow of fuel through the jet pump (1). In this way flow of steam along delivery line (5) into the jet pump (1) will be solely responsible for entrainment of fuel, and thus the steam to carbon ratio in the delivery line (3) to the steam reformer (2). Alternatively, it is possible to include in the delivery line (10) to the jet pump (1) a proportional control valve in order to modulate entrainment of fuel into the jet pump (1). In this case the jet pump (1) itself is overdesigned so that steam to carbon ratios lower than required in practice may be achieved. Then the proportional control valve may be used to ensure the required steam to carbon ratio in the output stream from the jet pump (1).

The embodiment shown includes two flow meters (9, 13) for the steam and fuel respectively. Preferably, the system operates using only a single flow meter in the fuel delivery line (10). This will be representative of steam flow into the jet pump (1) since flow of steam is directly responsible for fuel flow along delivery line (10) by entrainment due to the design of the jet pump (1).

In a slight variation of the embodiment shown in Figure 1 a flow control device may be included in the delivery line (10) in order to normalise disproportionate performance of the jet pump (1) in terms of fuel uptake depending on steam flow rate through the jet pump (1). The flow control device may take the form of a suitably rated zero governor and suitably rated needle valve provided in series in the delivery line (10) upstream of the jet pump (1). In this case the system may be calibrated as follows. The steam flow rate through the jet pump (1) is turned down, for example to about 4slm, and the zero governor adjusted to provide a fuel uptake such that a target S/C ratio may be obtained in the delivery line (3) to the steam reformer (2). The steam flow rate is then turned up so that the steam flow rate through the jet pump (1) is relatively high, for example 15 slm. The needle valve is then adjusted to limit the fuel uptake so as to achieve a suitable S/C ratio in the delivery line (3) to the steam reformer (2). By proceeding in this way it is possible to ensure that a suitable S/C ratio can be achieved over a full range of steam flow rates likely to be employed during operation of the fuel cell system. Once set in this way, the zero governor and needle valve are then only adjusted if need be, for example if there is a change in the fuel supply pressure and/or in the inherent operating characteristics of the jet pump.

Throughout this specification, unless the context requires otherwise, the word "comprise", and variations such as "comprises" and "comprising", will be understood to imply the inclusion of a stated integer or step or group of integers or steps but not the exclusion of any other integer or step or group of integers or steps.

## Claims

1. A fuel cell system comprising:
a fuel cell assembly;
a fuel reformer for delivery of a fuel cell supply stream to the fuel cell assembly;
a jet pump for delivery to the fuel reformer of a gas stream comprising steam and a gaseous hydrocarbon fuel, the jet pump having a single design utilisation condition and comprising a steam inlet, an inlet for the gaseous hydrocarbon fuel and an outlet for the gas stream;
a steam generator for delivery of pressurised steam to the steam inlet of the jet pump; and
a source of the gaseous hydrocarbon fuel for delivery of the gaseous hydrocarbon fuel to the fuel inlet of the jet pump via a fuel delivery line, wherein the fuel exerts a pressure at the fuel inlet of the jet pump that is insufficient to cause adequate fuel flow to the reformer to ensure satisfactory operation of the reformer over the intended range of operation; and
a flow control device in the fuel delivery line to the jet pump, wherein the flow control device is adjustable in order to control the proportion of fuel entrained by a given steam flow rate through the jet pump so that the steam to carbon ratio in the gas stream may be controlled.

2. A fuel cell system according to claim 1, wherein the source of hydrocarbon fuel is a relatively high pressure source and the flow control device reduces the fuel pressure at the jet pump inlet to zero or essentially zero.

3. A fuel cell system according to claim 2, wherein the source of hydrocarbon fuel is a bottled/liquefied source.

4. A fuel cell system according to claim 1, wherein the source of gaseous hydrocarbon fuel is mains supply gas.

5. A fuel cell system according to claim 4, wherein the maximum pressure at which the gaseous hydrocarbon fuel is provided at source is 1.1kPa.

6. A fuel cell system according to any one of the preceding claims, wherein the flow control device comprises in series a zero governor and a needle valve.

7. A fuel cell system according to any one of the preceding claims, wherein a proportional control valve is included in the fuel delivery line to the jet pump, the valve being operable to restrict the proportion of fuel entrained by a given steam flow rate through the jet pump so that the steam to carbon ratio in the gas stream may be controlled

8. A fuel cell system according to any one of the preceding claims, wherein the fuel reformer is a steam pre-reformer and the fuel cell assembly is capable of internal reforming of hydrocarbons at the anode thereof.

9. A fuel cell system according to any one of the preceding claims, wherein the steam generator delivers steam to the steam inlet of the jet pump at a temperature of from 150 to 1000°C and at a pressure of 5 kPag to 50 MPag.

10. A fuel cell system according to any one of the preceding claims, wherein the fuel cell system is rated at 1kW and the steam generator has a steam output of 500g/hour.

11. A fuel cell sub-system for delivery of a fuel cell supply stream to a fuel cell assembly, the fuel cell sub-system comprising:
a fuel reformer for delivery of the fuel cell supply stream to the fuel cell assembly;
a jet pump for delivery to the fuel reformer of a gas stream comprising steam and a gaseous hydrocarbon fuel, the jet pump having a single design utilisation condition and comprising a steam inlet, an inlet for the gaseous hydrocarbon fuel and an outlet for the gas stream;
a steam generator for delivery of pressurised steam to the steam inlet of the jet pump;
a fuel delivery line for delivering the gaseous hydrocarbon fuel to the inlet of the jet pump; and
a flow control device in the fuel delivery line to the jet pump, wherein the flow control device is adjustable in order to control the proportion of fuel entrained by a given steam flow rate through the jet pump so that the steam to carbon ratio in the gas stream may be controlled.

12. A method of operating a fuel cell system as claimed in claim 1, wherein a flow of steam is delivered to the jet pump thereby entraining and causing to flow gaseous hydrocarbon fuel through the jet pump, and adjusting the flow control device in order to control the proportion of fuel entrained by a given steam flow rate through the jet pump so that the steam to carbon ratio in the gas stream may be controlled, thereby generating a gas stream comprising steam and gaseous hydrocarbon fuel that is suitable for delivery to the fuel reformer.

13. A method according to claim 12, wherein the fuel reformer is a steam pre-reformer and the fuel cell assembly is capable of internal reforming of hydrocarbons at the anode thereof, and wherein steam pre-reforming is carried out such that the methane content of the fuel stream to the fuel cell assembly is adjusted based on prevailing load characteristics and on the prevailing cooling requirements of the fuel cell system.

## Patentansprüche

1. Brennstoffzellensystem, Folgendes umfassend:
eine Brennstoffzellenanordnung,
einen Brennstoffreformer, um der Brennstoffzellenanordnung einen Brennstoffzellen-Zufuhrstrom zuzuführen,
eine Strahlpumpe, um dem Brennstoffreformer einen Gasstrom zuzuführen, der Dampf und einen gasförmigen Kohlenwasserstoff-Brennstoff umfasst, wobei die Strahlpumpe eine einzige Bemessungsverwendungsbedingung aufweist und einen Dampfeinlass, einen Einlass für den gasförmigen Kohlenwasserstoff-Brennstoff und einen Auslass für den Gasstrom umfasst,
einen Dampfgenerator, um dem Dampfeinlass der Strahlpumpe mit Druck beaufschlagten Dampf zuzuführen,
eine Quelle des gasförmigen Kohlenwasserstoff-Brennstoffes, um dem Brennstoffeinlass der Strahlpumpe über eine Brennstoff-Zufuhrleitung den gasförmigen Kohlenwasserstoff-Brennstoff zuzuführen, wobei der Brennstoff einen Druck an dem Brennstoffeinlass der Strahlpumpe ausübt, der nicht ausreicht, um eine angemessene Brennstoffströmung zum Reformer zu bewirken, um den zufriedenstellenden Betrieb des Reformers über den beabsichtigten Betriebsbereich abzusichern, und
eine Strömungssteuerungsvorrichtung in der Brennstoff-Zufuhrleitung zur Strahlpumpe, wobei die Strömungssteuerungsvorrichtung justierbar ist, um den Anteil des von einer gegebenen Dampfströmungsrate durch die Strahlpumpe mitgeführten Brennstoffes derart zu steuern, dass das Verhältnis Dampf zu Kohlenstoff im Gasstrom gesteuert werden kann.

2. Brennstoffzellensystem nach Anspruch 1, wobei die Quelle des Kohlenwasserstoff-Brennstoffes eine Quelle mit relativ hohem Druck ist und die Strömungssteuerungsvorrichtung den Brennstoffdruck an der Strahlpumpe auf null oder im Wesentlichen null senkt.

3. Brennstoffzellensystem nach Anspruch 2, wobei die Quelle des Kohlenwasserstoff-Brennstoffes eine abgefüllte/verflüssigte Quelle ist.

4. Brennstoffzellensystem nach Anspruch 1, wobei die Quelle des Kohlenwasserstoff-Brennstoffes Gas aus einem Versorgungsnetz ist.

5. Brennstoffzellensystem nach Anspruch 4, wobei der Maximaldruck, mit dem der gasförmige Kohlenwasserstoff-Brennstoff an der Quelle bereitgestellt ist, 1,1 kPa beträgt.

6. Brennstoffzellensystem nach einem der vorhergehenden Ansprüche, wobei die Strömungssteuerungsvorrichtung nacheinander einen Nulldruckregler und ein Nadelventil umfasst.

7. Brennstoffzellensystem nach einem der vorhergehenden Ansprüche, wobei in der Brennstoff-Zufuhrleitung zur Strahlpumpe ein Proportionalwegeventil enthalten ist, wobei das Ventil betrieben werden kann, um den Anteil des von einer gegebenen Dampfströmungsrate durch die Strahlpumpe mitgeführten Brennstoffes derart einzuschränken, dass das Verhältnis Dampf zu Kohlenstoff im Gasstrom gesteuert werden kann.

8. Brennstoffzellensystem nach einem der vorhergehenden Ansprüche, wobei der Brennstoffreformer ein Dampf-Vorreformer ist und die Brennstoffzellenanordnung in der Lage ist, an ihrer Anode intern Kohlenwasserstoffe zu reformieren.

9. Brennstoffzellensystem nach einem der vorhergehenden Ansprüche, wobei der Dampfgenerator dem Dampfeinlass der Strahlpumpe Dampf mit einer Temperatur von 150 bis 1000 °C und einem Druck von 15 kPa bis 50 MPa zuführt.

10. Brennstoffzellensystem nach einem der vorhergehenden Ansprüche, wobei das Brennstoffzellensystem eine Nennleistung von 1 kW Leistung aufweist und der Dampfgenerator eine Dampfleistung von 500 g/h aufweist.

11. Brennstoffzellen-Subsystem für die Zufuhr eines Brennstoff-Zufuhrstromes zu einer Brennstoffzellenanordnung, wobei das Brennstoffzellen-Subsystem Folgendes umfasst:
einen Brennstoffreformer, um der Brennstoffzellenanordnung den Brennstoffzellen-Zufuhrstrom zuzuführen,
eine Strahlpumpe, um dem Brennstoffreformer einen Gasstrom zuzuführen, der Dampf und einen gasförmigen Kohlenwasserstoff-Brennstoff umfasst, wobei die Strahlpumpe eine einzige Bemessungsverwendungsbedingung aufweist und einen Dampfeinlass, einen Einlass für den gasförmigen Kohlenwasserstoff-Brennstoff und einen Auslass für den Gasstrom umfasst,
einen Dampfgenerator, um dem Dampfeinlass der Strahlpumpe mit Druck beaufschlagten Dampf zuzuführen,
eine Brennstoff-Zufuhrleitung, um dem Einlass der Strahlpumpe den gasförmigen Kohlenwasserstoff-Brennstoff zuzuführen, und
eine Strömungssteuerungsvorrichtung in der Brennstoff-Zufuhrleitung zur Strahlpumpe, wobei die Strömungssteuerungsvorrichtung justierbar ist, um den Anteil des von einer gegebenen Dampfströmungsrate durch die Strahlpumpe mitgeführten Brennstoffes derart zu steuern, dass das Verhältnis Dampf zu Kohlenstoff im Gasstrom gesteuert werden kann.

12. Verfahren zum Betreiben eines Brennstoffzellensystems nach Anspruch 1, wobei der Strahlpumpe ein Gasstrom zugeführt wird, durch den eine Strömung durch die Strahlpumpe bewirkt wird, die gasförmigen Kohlenwasserstoff-Brennstoff mit sich führt, und die Strömungssteuerungsvorrichtung justiert wird, um den Anteil des von einer gegebenen Dampfströmungsrate durch die Strahlpumpe mitgeführten Brennstoffes derart zu steuern, dass das Verhältnis Dampf zu Kohlenstoff im Gasstrom gesteuert werden kann, wodurch ein Gasstrom erzeugt wird, der Dampf und gasförmigen Kohlenwasserstoff-Brennstoff umfasst, der für die Zufuhr zum Reformer geeignet ist.

13. Verfahren nach Anspruch 12, wobei der Brennstoffreformer ein Dampf-Vorreformer ist und die Brennstoffzellenanordnung in der Lage ist, an ihrer Anode intern Kohlenwasserstoffe zu reformieren, und wobei das Dampf-Vorreformieren derart ausgeführt wird, dass der Methangehalt des Brennstoffstromes zur Brennstoffzellenanordnung basierend auf den vorherrschenden Lastkennlinien und den vorherrschenden Kühlungsanforderungen des Brennstoffzellensystems ausgeführt wird.

## Revendications

1. Système de pile à combustible comprenant:
un ensemble de pile à combustible ;
un reformeur de combustible pour délivrer un courant d'alimentation de pile à combustible à l'ensemble de pile à combustible ;
une pompe à jet pour délivrer au reformeur de combustible un courant gazeux comprenant de la vapeur et un combustible hydrocarboné gazeux, la pompe à jet ayant une condition d'utilisation à la conception unique et comprenant une admission de vapeur, une admission pour le combustible hydrocarboné gazeux et un refoulement pour le courant gazeux ;
un générateur de vapeur pour délivrer de la vapeur sous pression à l'admission de vapeur de la pompe à jet ; et
une source du combustible hydrocarboné gazeux pour délivrer le combustible hydrocarboné gazeux à l'admission de combustible de la pompe à jet via un conduit d'alimentation en combustible, dans lequel le combustible exerce une pression au niveau de l'admission de combustible de la pompe à jet qui est insuffisante pour provoquer un écoulement de combustible adapté vers le reformeur pour assurer un fonctionnement satisfaisant du reformeur sur la plage de fonctionnement prévue ; et
un dispositif de régulation d'écoulement dans le conduit d'alimentation en combustible vers la pompe à jet, dans lequel le dispositif de régulation d'écoulement est réglable afin de réguler la proportion de combustible entraîné par un débit de vapeur donné à travers la pompe à jet de sorte que le rapport vapeur sur carbone dans le courant gazeux peut être régulé.

2. Système de pile à combustible selon la revendication 1, dans lequel la source de combustible hydrocarboné est une source de pression relativement élevée et le dispositif de régulation d'écoulement réduit la pression de combustible au niveau de l'admission de la pompe à jet à zéro ou essentiellement zéro.

3. Système de pile à combustible selon la revendication 2, dans lequel la source de combustible hydrocarboné est une source en bouteille/liquéfiée.

4. Système de pile à combustible selon la revendication 1, dans lequel la source de combustible hydrocarboné est le réseau de distribution de gaz.

5. Système de pile à combustible selon la revendication 4, dans lequel la pression maximale à laquelle le combustible hydrocarboné gazeux est fourni à la source est de 1,1 kPa.

6. Système de pile à combustible selon l'une quelconque des revendications précédentes, dans lequel le dispositif de régulation d'écoulement comprend en série un régulateur atmosphérique et une soupape à pointeau.

7. Système de pile à combustible selon l'une quelconque des revendications précédentes, dans lequel une soupape de régulation proportionnelle est incluse dans le conduit d'alimentation en combustible vers la pompe à jet, la soupape étant opérationnelle pour restreindre la proportion de combustible entraîné par un débit de vapeur donné à travers la pompe à jet de sorte que le rapport vapeur sur carbone dans le courant gazeux peut être régulé.

8. Système de pile à combustible selon l'une quelconque des revendications précédentes, dans lequel le reformeur de combustible est un pré-reformeur à vapeur et l'ensemble de pile à combustible est capable de reformer de façon interne des hydrocarbures au niveau de son anode.

9. Système de pile à combustible selon l'une quelconque des revendications précédentes, dans lequel le générateur de vapeur délivre de la vapeur à l'admission de vapeur de la pompe à jet à une température de 150 à 1 000 °C et à une pression de 5 kPag à 50 MPag.

10. Système de pile à combustible selon l'une quelconque des revendications précédentes, dans lequel le système de pile à combustible a une valeur nominale de 1 kW et le générateur de vapeur a une production de vapeur de 500 g/heure.

11. Sous-système de pile à combustible pour délivrer un courant d'alimentation de pile à combustible à un ensemble de pile à combustible, le sous-système de pile à combustible comprenant :
un reformeur de combustible pour délivrer un courant d'alimentation de pile à combustible à l'ensemble de pile à combustible ;
une pompe à jet pour délivrer au reformeur de combustible un courant gazeux comprenant de la vapeur et un combustible hydrocarboné gazeux, la pompe à jet ayant une condition d'utilisation à la conception unique et comprenant une admission de vapeur, une admission pour le combustible hydrocarboné gazeux et un refoulement pour le courant gazeux ;
un générateur de vapeur pour délivrer de la vapeur sous pression à l'admission de vapeur de la pompe à jet ;
un conduit d'alimentation en combustible pour délivrer le combustible hydrocarboné gazeux à l'admission de la pompe à jet ; et
un dispositif de régulation d'écoulement dans le conduit d'alimentation en combustible vers la pompe à jet, dans lequel le dispositif de régulation d'écoulement est réglable afin de réguler la proportion de combustible entraîné par un débit de vapeur donné à travers la pompe à jet de sorte que le rapport vapeur sur carbone dans le courant gazeux peut être régulé.

12. Procédé d'exploitation d'un système de pile à combustible tel que revendiqué dans la revendication 1, dans lequel un écoulement de vapeur est délivré à la pompe à jet entraînant et amenant ainsi un combustible hydrocarboné gazeux à s'écouler à travers la pompe à jet, et réglant le dispositif de régulation d'écoulement afin de réguler la proportion de combustible entraîné par un débit de vapeur donné à travers la pompe à jet de sorte que le rapport vapeur sur carbone dans le courant gazeux peut être régulé, générant ainsi un courant gazeux comprenant de la vapeur et un combustible hydrocarboné gazeux qui est adapté pour être délivré au reformeur de combustible.

13. Procédé selon la revendication 12, dans lequel le reformeur de combustible est un pré-reformeur à vapeur et l'ensemble de pile à combustible est capable de reformer de façon interne des hydrocarbures au niveau de son anode, et dans lequel le pré-reformage à vapeur est réalisé de sorte que la teneur en méthane du courant de combustible vers l'ensemble de pile à combustible est réglé en se basant sur des caractéristiques de charge et sur les exigences de refroidissement en vigueur du système de pile à combustible.
